(19) Europäisches Patentamt
European Patent Office
Office européen des brevets

(11) Publication number: 0 118 889
B1

# (12) EUROPEAN PATENT SPECIFICATION

(45) Date of publication of patent specification: 26.10.88

(51) Int. Cl.[4]: C 07 F 7/18 // C07C69/63, C07C67/00, C07C67/333

(21) Application number: 84102513.3

(22) Date of filing: 08.03.84

## (54) Fluoroalkyl silyl ketene acetals and a process for preparing the same.

(30) Priority: 09.03.83 JP 38788/83

(43) Date of publication of application:
19.09.84 Bulletin 84/38

(45) Publication of the grant of the patent:
26.10.88 Bulletin 88/43

(84) Designated Contracting States:
DE FR GB

(56) References cited:
DE-A-1 668 365

(73) Proprietor: Daikin Kogyo Co., Ltd.
Shinhankyu Building No 1-12-39, Umeda Kita-ku
Osaka-shi Osaka-fu (JP)

(72) Inventor: Ishikawa, Nobuo, Prof. Dr.-Ing.
10-10, Shinoharadai-machi Kohoku-ku
Yokohama-shi Kanagawa-ken (JP)
Inventor: Nakai, Takeshi
23-403, Wakaba-dai 2-chome Asahi-ku
Yokohama-shi Kanagawa-ken (JP)

(74) Representative: Patentanwälte TER MEER - MÜLLER - STEINMEISTER
Mauerkircherstrasse 45
D-8000 München 80 (DE)

EP 0 118 889 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Background of the Invention

*Field of the Invention*

The present invention relates to a fluoroalkyl silyl ketene acetal, that is useful as the intermediate for the synthesis of physiologically active substances having a fluoroalkyl substituent, and a process for preparing the same.

*Description of the Prior Art*

A group of compounds having a $CF_3$ substituent have been noticed for their physiological activities. A possible method of synthesis of such $CF_3$ containing compounds is to form various carbon-carbon bonds to a synthetic block having a $CF_3$ substituent. However, there are only very few disclosures of such method, for example, α-trifluoromethyl malonic acid ester published at the 8th Fluorine Chemistry Discussion in Japan (1982).

Objects and Summary of the Invention

The present authors thus considered 3,3,3-trifluoropropionic acid esters as such a synthetic block and succeeded to synthesize their ester enolate form or trifluoromethylsilylketene acetals, which has led to the present invention.

Accordingly it is an object of the present invention to provide a fluoroalkyl silyl ketene acetal represented by a general formula

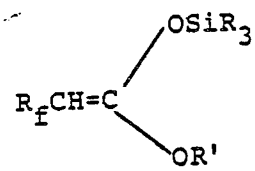

wherein $R_f$ represents a fluoroalkyl group, having 1 to 10 carbon atoms, and R and R′ are the same or different and each represents an alkyl group having 1 to 10 carbon atoms.

It is another object of the invention to provide a process for preparing said fluoroalkyl silyl ketene acetal, comprising reacting a fluorinated carboxylic acid ester represented by a formula

$$R_fCH_2COOR'$$

wherein $R_f$ and R′ are respectively the same as defined above with a silylating agent represented by a formula

$$R_3SiOTf$$

wherein Tf represents a trifluoromethanesulfonyl group and R represents the same as defined above.

In the present invention, for Rf in the above formulas, a group of 1 to 10 carbon atoms is used and for each of R and R′ therein, an alkyl group of 1 to 10 carbon atoms is used. Examples of such group are $—CF_3$, $—C_2F_5$ and $—C_3F_7$ while examples of such alkyl group are $—CH_3$, $—C_2H_5$ and $—C_3H_7$.

In the process of the invention, the solvent used is preferably an organic solvent, such as diethyl ether or dichloromethane.

Other objects and advantages of the invention will become apparent from the following description of embodiments.

Description of the Preferred Embodiments

When trimethylsilyltriflate ($Me_3SiOTf$) has been used in synthesis of an enolate equivalent trifluoromethylsilylketeneactal *2* from 3,3,3-trifluoropropionic acid ester *1* according to the following reaction, the target silyl ketene acetal *2* has been produced in a high yield (for example, 92% from $^{19}F$ NMR data):

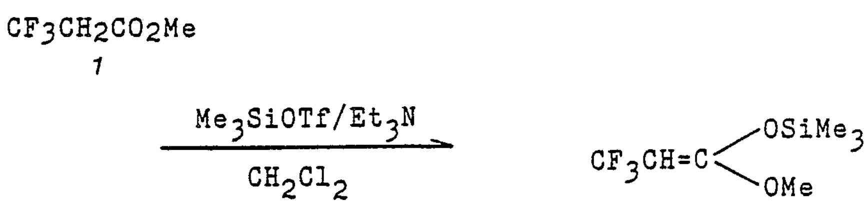


*1* *2*

Such a high yield in the synthesis of silyl ketene acetal *2* is noteworthy since if an ordinary ester having

no trifluoromethyl group is used as the starting material, the $Me_3SiOTf/Et_3N$ reaction system gives a α-trimethylsilyl ester. In fact, it has been even confirmed that methyl propionate, if used, gives α-trimethylsilyl ester as the principal product. In contrast to that, it has been found that if an ester having a $CF_3$ group, which is highly electron attractive, at its α-position is used as the starting material as in the present invention, the reaction proceeds as mentioned above.

The chemical structure of acetal *2* was identified by $^1H$ NMR and $^{19}F$ NMR. It was confirmed that the ratio of geometric isomers was *E:Z* = 1:4.

Further, from a finding that the acetal *2* as synthesized above could undergo the following reaction with various carbon's electron-seeking compounds (electrophilic reagents) under Lewis acidic condition, it has been revealed that this acetal can be used as a useful block for the synthesis of α-trifluoromethyl esters, etc.:

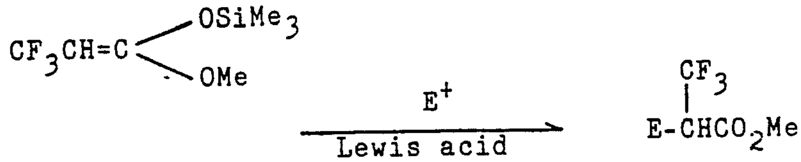


wherein $E^+$ is an electrophilic reagent.

This reaction can be conducted with the reaction giving the acetal *2* in situ, namely, without isolation. For example, when the acetal *2* has been reacted with propionic acid chloride ($CH_3CH_2COCl$) as follows, a corresponding α-trifluoromethyl-β-ketoester *4* has been and isolated at a yield of 54%.

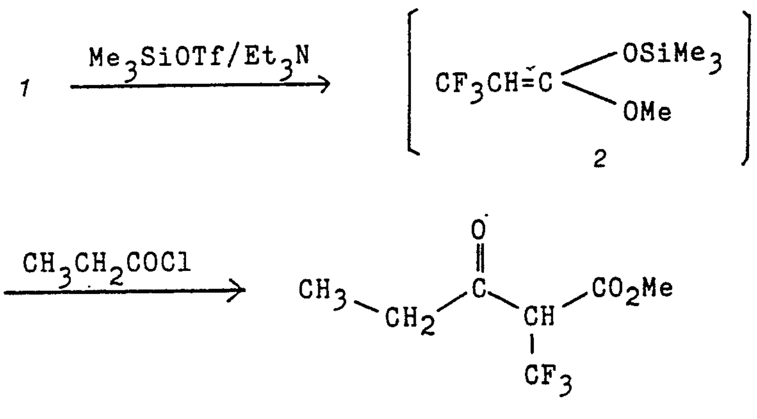


*1* *2* *4*

In addition to the above reaction, it has been found that when an aldol addition type reaction is applied to the acetal *2*, α-trifluoromethylated carboxylic acid ester *5* can be formed as follows:

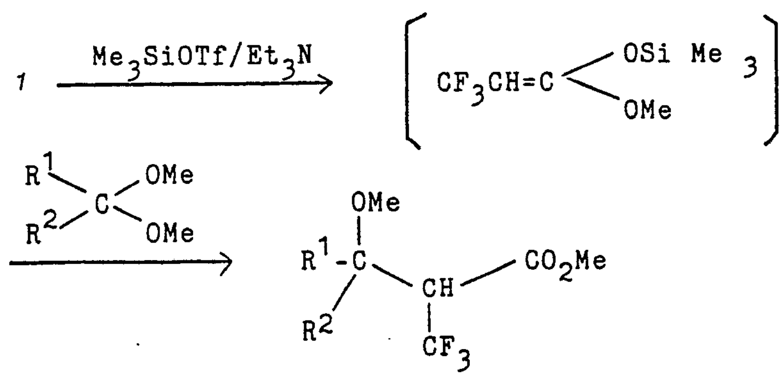


*1* *5*

More specifically, when an aldol addition type reaction has been performed with acetals using the trimethyl silyl triflate ($Me_3SiOTf$) as catalyst, 1.2 equivalent of said triflate has been used relative to the ester *1* in consideration of the fact that the acetal *2* releases fluoride ions $F^-$ readily. The actetal *2* thus produced is cooled down to −78°C in situ and then various carbonyl substrates are added thereto for the addition reaction. The reaction completes in several hours giving the corresponding aldol adduct *5* in high yield.

Aldol adduct compounds thus produced are listed in Table 1. Except for one example, namely in the case of sample 4, the reaction always showed only a low diastereo selectivity.

It is noted that the erythro form of the Sample 5 is equivalent to the trifluoro form of an intermediate used for the synthesis of antibiotics oudemansin. It is thus expected that trifluorooudemansin can be synthesized by the following reaction:

Table 1

| Sample | Electrophile | Reaction cond. | Product | Yield, % (diastereo selection ratio) |
|---|---|---|---|---|
| 1 | 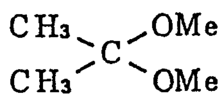 | −78℃ 6h | 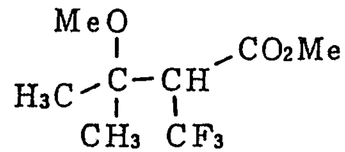 | 74 |
| 2 | 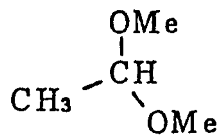 | −78℃ 6h | 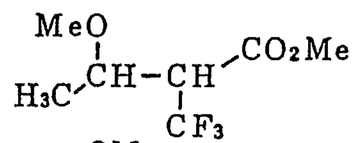 | 81 (55 : 45) |
| 3 | 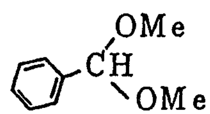 | −78℃ 4.5h | 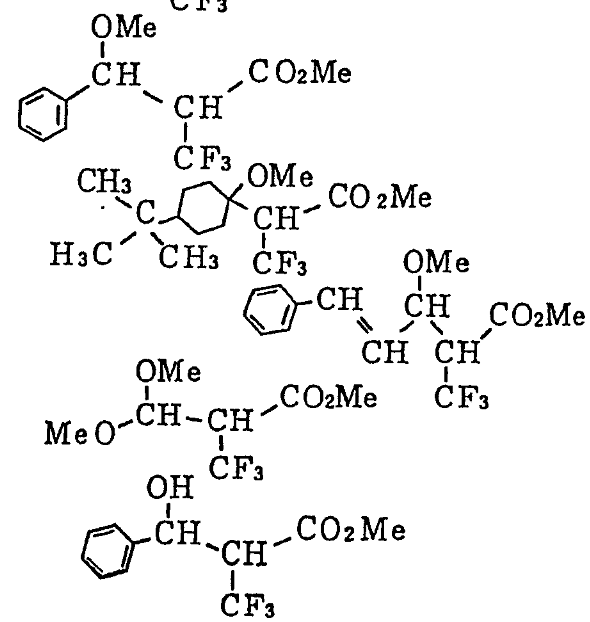 | 89 (67 : 33) |
| 4 | 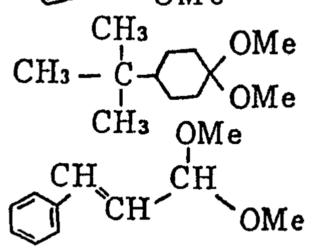 | −78℃ 9h | | 82 (100 : 0) |
| 5 | | −78℃ 5 h | | 92 (55 : 45) |
| 6 | HC (OMe)$_3$ | −78℃ 5 h | | 76 |
| 7 | 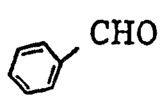 | −78℃ 5 h | | 93 (60 : 40) |

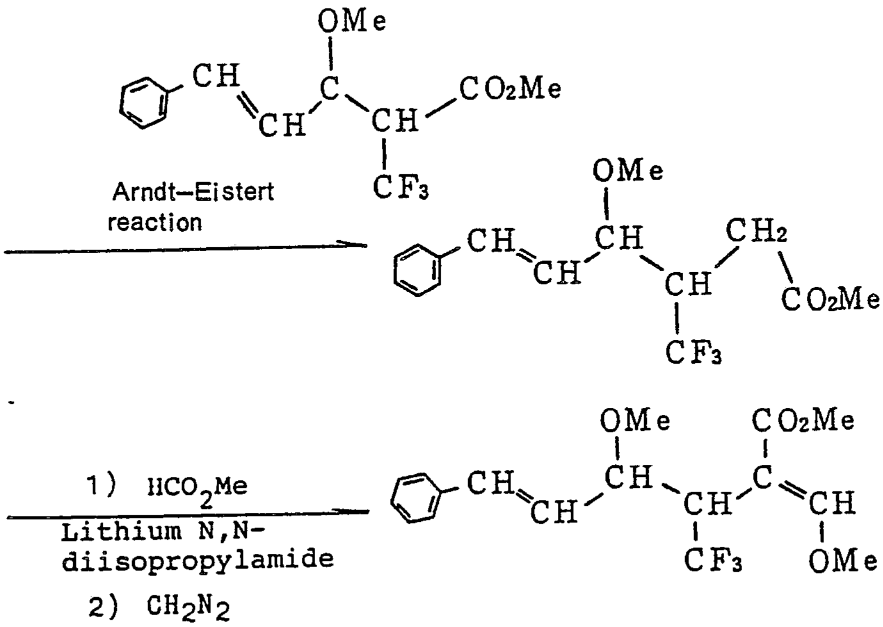


It has been confirmed that, as in the above case of Sample 7, the aldol addition reaction of acetal *2* and benzaldehyde gives the corresponding β-hydroxy-α-trifluoromethyl ester in high yield.

As mentioned above, the acetal *2* is useful as an intermediate for various processes of synthesis. This is summarized in the following diagram:

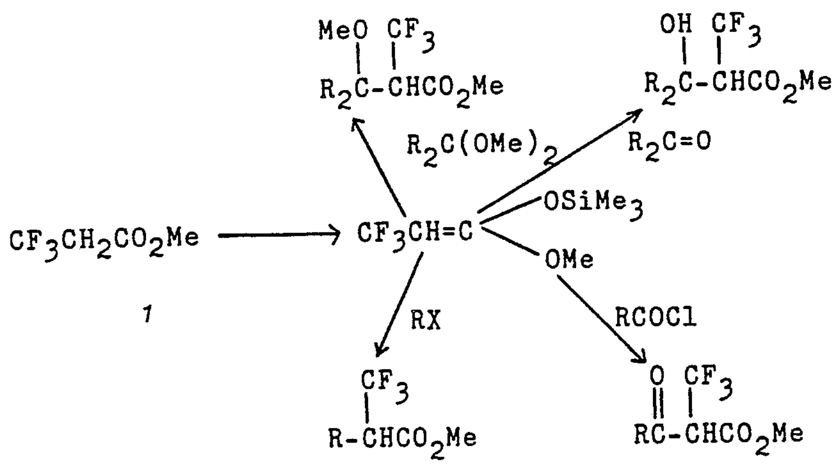


1

The invention will be more clearly understood with reference to the following examples.

Example

Synthesis of TFPE:

*Methyl 2-(trifluoromethyl)-3,3,3-trifluoropropionate.* 200 ml of conc. sulfuric acid was added dropwisely to 232 g (1.0 mol) of octafluoroiso-butene-methanol adduct and the mixture was agitated overnight at room temperature. It was then poured over ice and the oily layer was separated, washed with water, saturated aqueous sodium bicarbonate solution and then water, and dried on magnesium sulfate. Purification by distillation gave methyl 2-(trifluoromethyl)-3,3,3-trifluoropropionate (184 g, 88%). Its analysis gave the following data:

B.p.: 89—90°C

$^{19}F$ NMR (neat): δ−12.5 (d, J = 6.2 Hz).

*Methyl 3,3,3-trifluoropropionate (TFPE).* A solution of 150 g (1.5 mol) of potassium acetate in 500 ml of water was added dropwise to a solution of 105 g (0.5 mol) of methyl 2-(trifluoromethyl)-3,3,3-trifluoropropionate as above produced in 250 ml of water and the mixture was refluxed for 5 hours. After separation of the oily layer, extraction was made from the water layer that was left with use of methylene chloride and the solution of extracts and separated oily layer were joined and dried. After methylene chloride was removed by evaporation under atmospheric pressure, purification was made by distillation to give methyl 3,3,3-trifluoropropionate (TFPE) (54.07 g, 76%). Its analysis gave the following data:

B.p.: 95 to 95.5°C
IR (capillary film): 2970, 1760, 1440, 1230, 1120 $cm^{-1}$
$^{1}H$ NMR ($CCl_4$): δ 3.13 (q, J = 10.3 Hz, 2H), 3.77 (s, 3H)
$^{19}F$ NMR (neat): δ−12.7 (t, J = 10.3 Hz)

Synthesis of trifluoromethylsilylketene acetal:

*1-(trimethylsiloxy)-1-methoxy-3,3,3-trifluoro-1-propene (E:Z = 1:4).* A solution of 0.71 g (5 mmol) of TFPE as above obtained in 3 ml of dry methylene chloride was added dropwise to a mixture of 1.00 ml (5.5 mmol) of trimethylsilyl triflate, 0.77 ml (5.5 mmol) of triethylamine and 3 ml of dry methylene chloride and the solution was agitated for 18 hours at room temperature. After a trap of −90°C was attached, distillation was performed by flash evaporation at room temperature/2 mmHg to produce 1-(trimethylsiloxy)-1-methoxy-3,3,3-trifluoro-1-propene in methylene chloride (Yield: 86%). Its analysis gave the following data:

*E* form:
$^{1}H$ NMR ($CDCl_3$): δ 0.32 (s, 9H), 3.67 (s, 3H), 3.90 (q, J = 7.6 Hz, 1H)
$^{19}F$ NMR ($CDCl_3$): δ−23.9 (d, J = 7.6 Hz)

*Z* form:
$^{1}H$ NMR ($CDCl_3$): δ 0.24 (s, 9H), 3.61 (s, 3H), 3.96 (q, J = 7.1 Hz, 1H)
$^{19}F$ NMR ($CDCl_3$): δ−24.2 (d, J = 7.1 Hz)

It is noted that the yield was determined from $^{19}F$ NMR data obtained using fluorobenzene as the standard and the ratio of the *E* form to the *Z* form was also determined from $^{19}F$ NMR data.

**Claims**

1. A fluoroalkyl silyl ketene acetal represented by a general formula

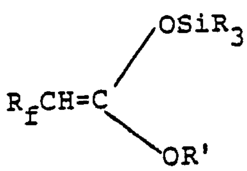

wherein $R_f$ represents a fluoroalkyl group having 1 to 10 carbon atoms, and R and R′ are the same or different and each represents an alkyl group having 1 to 10 carbon atoms.

2. A process for preparing a fluoroalkyl silyl ketene acetal represented by a general formula

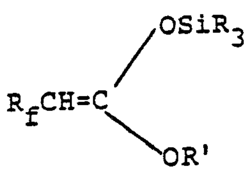

wherein $R_f$ represents a fluoroalkyl group having 1 to 10 carbon atoms, and R and R′ are the same or different and each represents an alkyl group having 1 to 10 carbon atoms comprising reacting a fluorinated carboxylic acid ester represented by a formula

$$R_fCF_2COOR'$$

wherein $R_f$ and R′ are respectively the same as defined above with a silylating agent represented by a formula

$$R_3SiOTf$$

wherein Tf represents a trifluoromethane sulfonyl group and R is the same as defined above.

**Patentansprüche**

1. Fluoralkylsilylketenacetal der allgemeinen Formel

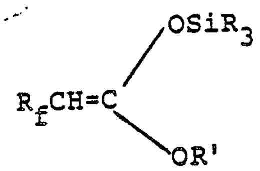

worin $R_f$ eine Fluoralkylgruppe mit 1 bis 10 Kohlenstoffatomen und R und R′ jeweils gleiche oder voneinander verschiedene Alkylgruppen mit 1 bis 10 Kohlenstoffatomen bedeuten.

2. Verfahren zur Herstellung eines Fluoralkylsilylketenacetals der allgemeinen Formel

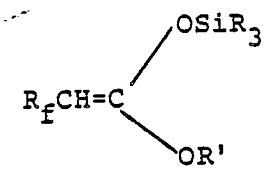

worin $R_f$ eine Fluoralkylgruppe mit 1 bis 10 Kohlenstoffatomen und R und R′ jeweils gleiche oder voneinander verschiedene Alkylgruppen mit 1 bis 10 Kohlenstoffatomen bedeuten, dadurch gekennzeichnet, daß man einen fluorierten Carbonsäureester der Formel

$$R_fCH_2COOR'$$

worin $R_f$ bzw. R′ die gleichen obigen Bedeutungen haben, mit einem Silylierungsmittel der Formel

$$R_3SiOTf$$

worin Tf eine Trifluormethansulfonylgruppe bedeutet und R die oben angegebenen Bedeutungen besitzt, umsetzt.

**Revendications**

1. Fluoroalkyl silyl cétène acétal, de formule générale:

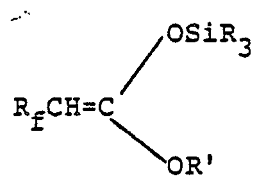

dans laquelle $R_f$ représente un groupe fluoroalkyle comportant de 1 à 10 atomes de carbone, et les groupes R et R′ sont identiques ou différents et ils représentent chacun un groupe alkyle comportant de 1 à 10 atomes de carbone.

2. Procédé de préparation d'un fluoroalkyl silyl cétène acétal, de formule générale:

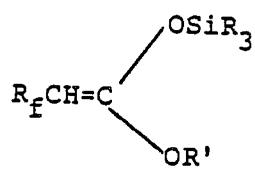

dans laquelle $R_f$ représente un groupe fluoroalkyle comportant de 1 à 10 atomes de carbone, et les groupes R et R′ sont identiques ou différents et ils représentent chacun un groupe alkyle comportant de 1 à 10 atomes de carbone, dans lequel on fait réagir un ester d'acide carboxylique fluoré, de formule:

$$R_fCH_2COOR'$$

dans laquelle les groupes $R_f$ et R' ont chacun la même définition que ci-dessus, avec un agent de silylation, de formule:

$$R_3SiOTf$$

dans laquelle Tf représente un groupe trifluorométhane sulfonyle, et R a la même définition que ci-dessus.